(19) **Europäisches Patentamt / European Patent Office / Office européen des brevets**

(11) **EP 4 173 130 B1**

(12) **FASCICULE DE BREVET EUROPEEN**

(45) Date de publication et mention
de la délivrance du brevet:
**06.08.2025   Bulletin 2025/32**

(21) Numéro de dépôt: **21730249.6**

(22) Date de dépôt: **10.06.2021**

(51) Classification Internationale des Brevets (IPC):
***H02P 21/00*** *(2016.01)*

(52) Classification Coopérative des Brevets (CPC):
**H02P 21/00**

(86) Numéro de dépôt international:
**PCT/EP2021/065695**

(87) Numéro de publication internationale:
**WO 2021/259662 (30.12.2021 Gazette 2021/52)**

(54) **PROCEDE ET SYSTEME DE COMMANDE D'UNE MACHINE ELECTRIQUE SYNCHRONE**

VERFAHREN UND SYSTEM ZUR STEUERUNG EINER ELEKTRISCHEN SYNCHRONMASCHINE

METHOD AND SYSTEM FOR CONTROLLING A SYNCHRONOUS ELECTRIC MACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **25.06.2020   FR 2006642**

(43) Date de publication de la demande:
**03.05.2023   Bulletin 2023/18**

(73) Titulaire: **IFP Energies nouvelles
92500 Rueil-Malmaison (FR)**

(72) Inventeurs:
• **VIDAL-NAQUET, Fabien
92852 RUEIL-MALMAISON CEDEX (FR)**
• **HAJE OBEID, Najla
92852 RUEIL-MALMAISON CEDEX (FR)**
• **KUENTZMANN, Emmanuel
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**KR-A- 20200 049 165     US-A1- 2013 088 179
US-B2- 9 768 719**

## Description

### Domaine technique

La présente invention concerne un procédé de commande d'une machine électrique synchrone, de préférence une machine électrique triphasée, par exemple du type synchro-réluctante ou synchrone à aimants permanents.

L'invention concerne également un système de commande mettant en œuvre un tel procédé.

### Art antérieur

Il est connu d'avoir recours à des machines électriques tournantes telles que des machines électriques synchrones à aimants permanents ou des machines synchro-réluctantes, en particulier des machines synchro-réluctantes assistées d'aimants permanents. De telles machines électriques sont, par exemple, utilisées dans le domaine de la propulsion, par exemple pour la génération de couples moteurs à bord d'un véhicule tel qu'un véhicule automobile.

Le document FR 3 051 296 A1 décrit, par exemple, une machine synchro-réluctante assistée d'aimants permanents

De telles machines électriques tournantes sont avantageuses dans la mesure où, lorsqu'un régime dit « de saturation de tension » est atteint, il est encore possible d'accroître la vitesse de rotation du rotor de la machine tout en limitant significativement la décroissance du couple mécanique fourni par la machine tournante, et ce en réalisant une opération appelée « défluxage ». Une telle décroissance du couple mécanique fourni par la machine électrique tournante, lorsque la vitesse de rotation est augmentée, est un phénomène indésirable courant se produisant lorsqu'un tel défluxage n'est pas mis en œuvre.

Par « régime de saturation de tension », il est entendu, au sens de la présente invention, une situation dans laquelle tension appliquée aux bornes de la machine tournante devient égale à une tension maximale disponible, dont la valeur dépend de l'installation électrique à laquelle la machine tournante est raccordée, de sorte qu'il n'est plus possible d'augmenter la tension d'alimentation de la machine tournante.

En outre, par « défluxage », il est entendu, au sens de la présente invention, un procédé de commande d'une telle machine électrique, comprenant une injection de courant au niveau des phases, c'est-à-dire des enroulements, du stator de la machine tournante afin de compenser, au moins en partie, le champ magnétique généré par les aimants du rotor de ladite machine électrique tournante.

Un tel procédé de commande comprend généralement le calcul de courants et de tensions dits « directs » et « en quadrature », qui sont des courants et tensions virtuels exprimés dans un repère tournant lié au rotor, et la mise en œuvre de deux asservissements, l'un portant sur les grandeurs dites « directes », et l'autre portant sur les grandeurs dites « en quadrature », afin de déterminer les tensions à appliquer à chaque phase de la machine tournante.

Les machines électriques tournantes évoquées ci-dessus étant synchrones, la mise en œuvre du défluxage implique une synchronisation entre les champs magnétiques tournants du stator et du rotor. L'angle formé entre les directions respectives du champ magnétique des aimants du rotor et des courants exprimés dans le repère tournant lié au rotor est appelé « angle de défluxage ».

Le défluxage consiste donc à générer un champ magnétique induit par les courants au stator pour compenser, au moins en partie, l'effet du champ magnétique du rotor, et ce dans le but de réduire la tension aux bornes de la machine tournante. De cette façon, la machine tournante est apte à absorber plus de courant, et donc à fournir un couple mécanique plus important au même régime, que lorsqu'un tel défluxage n'a pas lieu. Un tel défluxage est donc avantageux, dans la mesure où il limite la perte de couple mécanique produit par la machine tournante et accroît la vitesse de rotation du rotor à une valeur de couple donnée, et ce sans que la tension aux bornes de la machine tournante ne dépasse la tension maximale. Ainsi, même dans le régime de saturation de tension, la puissance consommée par la machine électrique tournante est maintenue égale à une puissance plus élevée qu'en l'absence de défluxage, ce qui se traduit par de meilleures performances.

Notamment, les machines synchro-réluctantes ont des capacités de défluxage importantes, ce qui permet de bénéficier d'une grande partie de leur puissance jusqu'à leur vitesse maximale.

Des exemples de procédés et systèmes de commande sont décrits notamment dans les demandes de brevet US 9479102 et US 9768719.

La demande de brevet US 9479102 décrit un système et une méthode de commande d'une machine électrique synchrone. La commande de la machine électrique synchrone est basée sur une consigne de couple et sur une estimation du flux magnétique lié au rotor. Cette commande permet une opération de défluxage de la machine électrique. Toutefois, une telle méthode peut ne pas être robuste à la limite de tension de bus DC.

En outre, la demande de brevet US 9768719 décrit des méthodes et des systèmes de commande de machine électrique synchrone avec des aimants permanents. La commande de la machine électrique est basée sur des tables MTPA (de l'anglais « Maximum Torque Per Ampere » pouvant être traduit par maximum de couple par ampère). De plus, la commande modifie les consignes de courant en fonction de la limite de tension de la machine électrique. Par conséquent, en modifiant les consignes de courant après l'utilisation des tables MTPA, cette commande ne garantit pas l'exactitude de la détermination de la tension limite, ce qui peut impliquer une surutilisation ou une sous-utilisation de la tension de bus de l'onduleur.

La demande de brevet KR 10-2020-0049165 A1 décrit une méthode de contrôle d'une machine électrique.

La demande de brevet US 9,768,719 décrit une méthode et un dispositif pour générer des commandes de courant pour une machine électrique à aimants permanents.

La demande de brevet US 2013/0088179 A1 décrit un dispositif de contrôle d'une machine synchrone.

## Résumé de l'invention

L'invention a pour but de garantir une utilisation optimale de la tension de bus DC, permettant l'amélioration du rendement de la machine électrique et/ou de la performance maximale de la machine électrique. Dans ce but, la présente invention concerne un procédé et un système de commande d'une machine électrique synchrone pilotée par un onduleur, dans lequel on détermine la commande de l'onduleur. Le procédé et le système de commande selon l'invention mettent en œuvre un modèle de contrôle en fonction de la consigne de couple ou de la consigne de vitesse et d'une variable de commande corrigée, la correction étant mise en œuvre au moyen d'une boucle de rétroaction. Ainsi, grâce à cette correction de la variable de commande, le procédé et le système de commande selon l'invention garantissent une utilisation optimale et robuste de la tension de bus continu.

L'invention concerne un procédé de commande d'une machine électrique synchrone pilotée par un onduleur pourvu de plusieurs bras de commutation, dans lequel on met en œuvre les étapes suivantes :

a) On acquiert une consigne de couple de ladite machine électrique ;

b) On acquiert une consigne ou une mesure d'au moins une variable de commande de ladite machine électrique ;

c) On détermine un paramètre de correction de ladite variable de commande en fonction d'une prédiction de tension absolue dépendante de courants dans les phases de ladite machine électrique et en fonction de consignes de tension ;

d) On détermine des consignes de courant de ladite machine électrique au moyen d'au moins un modèle de contrôle qui relie ladite consigne de couple, ladite variable de commande corrigée au moyen dudit paramètre de correction et lesdites consignes de courant de ladite machine électrique ;

e) On détermine un signal de commande de commutation dudit onduleur au moyen desdites consignes de courant ; et

e) On détermine un signal de commande de commutation dudit onduleur au moyen desdites consignes de courant ; et

f) On commande ledit onduleur au moyen dudit signal de commande de commutation.

Selon un mode de réalisation de l'invention, le modèle de contrôle est une cartographie qui relie ladite consigne de couple, ladite variable de commande corrigée, et lesdits consignes de courant, de préférence ladite cartographie est de type maximum de couple par ampère (MTPA).

Avantageusement, on détermine, par un estimateur, ladite prédiction de tension absolue au moyen desdites consignes de courant ou au moyen de mesures desdits courants dans les phases de ladite machine électrique.

Conformément à une mise en œuvre, on détermine lesdites consignes de tension au moyen d'au moins un régulateur proportionnel intégral et desdites consignes de courant.

De manière avantageuse, on détermine ledit paramètre de correction en mettant en œuvre les étapes suivantes :

i) On détermine une prédiction de tension absolue ;

ii) On détermine lesdites consignes de tension ;

iii) On calcule une tension absolue de consigne par la formule : $V_{abs}^{sp} = \sqrt{V_d^{sp2} + V_q^{sp2}}$ , $V_d{}^{sp}$ et $V_q{}^{sp}$ étant respectivement les consignes de tension directe et en quadrature ;

iv) On compare ladite prédiction de tension absolue à ladite tension absolue n de consigne ; et

v) On en déduit ledit paramètre de correction à partir de ladite comparaison.

Avantageusement, on détermine ledit signal de commande au moyen desdites consignes de tension et d'un contrôle vectoriel.

Selon un aspect, ledit paramètre de correction est un gain ou une valeur corrigée d'une variable de ladite machine électrique, de préférence ledit paramètre de correction est une valeur corrigée de la tension de bus continu de l'onduleur.

Selon une option de réalisation, ladite variable de commande de ladite machine électrique est la vitesse de

3

rotation électrique du rotor de ladite machine électrique.

Avantageusement, on estime ou on mesure ladite vitesse de rotation électrique dudit rotor de ladite machine électrique, de préférence on mesure ladite vitesse de rotation électrique dudit rotor par multiplication de la mesure de la vitesse de rotation mécanique dudit rotor par le nombre de paires de pôles de ladite machine électrique.

Conformément à un mode de réalisation, on mesure ladite vitesse de rotation dudit rotor au moyen d'un capteur de position et/ou un capteur de vitesse de rotation dudit rotor.

En outre, l'invention concerne un système de commande d'une machine électrique synchrone comprenant un onduleur pourvu de bras de commutation, un calculateur et une mémoire configurés pour mettre en œuvre les étapes du procédé de commande selon l'une des caractéristique précédentes pour commander ledit onduleur.

Selon une mise en œuvre, ladite machine électrique est une machine synchro-réluctante assistée par des aimants permanents ou une machine synchrone à aimants permanents.

D'autres caractéristiques et avantages du procédé et du système selon l'invention, apparaîtront à la lecture de la description ci-après d'exemples non limitatifs de réalisations, en se référant aux figures annexées et décrites ci-après.

## Liste des figures

La figure 1 illustre le système de commande selon un mode de réalisation de l'invention.

La figure 2 illustre les étapes du procédé de commande selon un premier mode de réalisation de l'invention.

La figure 3 illustre les étapes du procédé de commande selon un deuxième mode de réalisation de l'invention.

La figure 4 illustre les étapes du procédé de commande selon un troisième mode de réalisation de l'invention.

La figure 5 illustre deux exemples de cartographies MTPA utilisées pour le procédé et le système selon le troisième mode de réalisation de l'invention.

## Description des modes de réalisation

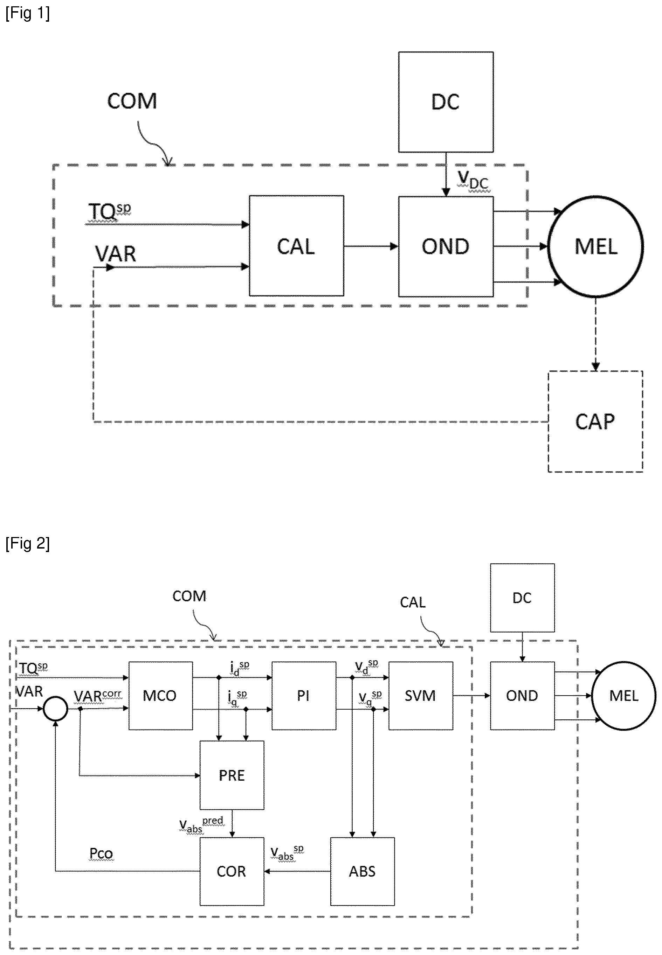

Sur la figure 1 est représentée, schématiquement et de manière non limitative, une installation comprenant une machine électrique tournante MEL associée, pour sa commande, à un système de commande COM selon l'invention (le système de commande COM mettant en œuvre le procédé de commande selon l'invention). L'installation comporte également une source DC d'énergie électrique, telle qu'un bus de tension continue.

La machine électrique tournante MEL est une machine tournante synchrone, avec plusieurs phases, de préférence trois phases (alternativement la machine électrique synchrone peut comporter une nombre de phases multiple de trois, par exemple six, neuf ou douze, ou encore quatre ou cinq phases). De préférence, la machine électrique synchrone MEL peut être une machine électrique synchrone à aimants permanents ou synchro-réluctante, en particulier une machine tournante triphasée synchro-réluctante assistée d'aimants permanents. En effet, de telles machines électriques possèdent des capacités de défluxage importantes.

Pour l'exemple illustré (non limitatif), la machine électrique synchrone MEL comporte trois entrées. Chaque entrée correspond à une phase d'un stator (non représenté) de la machine électrique tournante MEL.

Le système de commande COM est destiné à piloter, au cours du temps, l'alimentation de la machine tournante MEL en fonction de valeurs cibles et/ou de valeurs mesurées de grandeurs prédéterminées. Ces valeurs cibles et/ou valeurs mesurées sont appelées dans la suite de la description variables de commande de la machine électrique. Pour le procédé et le système selon l'invention, le système de commande COM prend en compte une consigne de couple $TQ^{sp}$ (qui peut provenir classiquement d'une demande de l'utilisateur de la machine électrique, alternativement cette consigne de couple peut être calculée par une régulation de vitesse), et au moins une autre variable de commande VAR, par exemple la vitesse de rotation électrique $\omega_e$ du rotor (non représenté) de la machine électrique (alternativement cette variable peut aussi être la norme du flux magnétique dans les phases). On rappelle que la vitesse de rotation électrique $\omega_e$ du rotor correspond à la multiplication de la vitesse de rotation mécanique $\omega_m$ du rotor par le nombre de paires de pôles de la machine électrique synchrone MEL. En d'autres termes, on peut écrire : $\omega_e = p.\omega_m$ avec p le nombre de paires de pôles de la machine électrique synchrone MEL.

Le système de commande COM comporte un onduleur OND et un calculateur CAL. Le système de commande COM peut comporter si besoin un capteur CAP de position angulaire et/ou de vitesse de rotation angulaire du rotor de la machine électrique MEL. Un tel capteur permet de déterminer la vitesse de rotation angulaire $\omega_m$ de la machine électrique soit directement (cas d'un capteur de vitesse), soit par dérivation (cas du capteur de position). En outre, le système de commande COM peut comporter des moyens de mesure des courants (non représentés) dans les phases de la machine électrique, par exemple des capteurs de courant.

L'onduleur OND est configuré pour acheminer de l'énergie électrique entre la source DC et la machine électrique synchrone MEL. Plus précisément, l'onduleur OND est configuré pour acheminer de l'énergie électrique entre la source DC et chaque phase du stator de la machine électrique synchrone MEL. La source DC (par exemple une batterie) fournit une tension de bus continu, notée $V_{DC}$.

L'onduleur OND comporte une première entrée reliée à la source DC, et trois sorties, chacune reliée à une phase correspondante du stator de la machine électrique synchrone MEL. L'onduleur OND comporte, en outre, une deuxième entrée électriquement reliée à une sortie du calculateur CAL, de sorte que l'onduleur OND est configuré pour acheminer de l'énergie électrique entre la source DC et la machine électrique synchrone MEL en fonction d'un signal de commande de commutation appliqué par le calculateur CAL à la deuxième entrée de l'onduleur OND.

De préférence, le signal de commande de commutation peut être tel que l'onduleur OND achemine de l'énergie électrique depuis la source DC vers la machine électrique synchrone MEL de sorte que la machine électrique synchrone MEL présente un fonctionnement communément appelé « moteur » et/ou un fonctionnement communément appelé « générateur ». Classiquement, l'onduleur OND comporte plusieurs bras de commutation (non représenté), de préférence au moins un bras de commutation pour chaque phase de la machine électrique, pour transformer le signal continu depuis la source DC en un signal alternatif pour les phases de la machine électrique MEL. Chaque bras de commutation comporte au moins un commutateur commandé. De manière classique, on peut commander chaque commutateur des bras de commutation au moyen d'une modulation de largeur d'impulsion MLI (ou PWM de l'anglais Pulse Width Modulation).

Le capteur optionnel de position angulaire ou de vitesse de rotation angulaire CAP peut être configuré pour mesurer la position mécanique angulaire, d'un rotor (non représenté) de la machine électrique synchrone par rapport au stator (non représenté), et pour délivrer un signal de position angulaire (respectivement de vitesse de rotation angulaire) représentatif de la valeur mesurée de la position angulaire (respectivement de la vitesse de rotation angulaire) du rotor de la machine électrique synchrone.

En outre, le capteur optionnel CAP de position angulaire ou de vitesse de rotation angulaire peut être configuré pour appliquer le signal de position angulaire (respectivement de vitesse de rotation angulaire) à une entrée correspondante du calculateur CAL.

Le procédé de commande d'une machine électrique synchrone selon l'invention comporte les étapes suivantes :

- Réception de la consigne de couple de la machine électrique synchrone,
- Acquisition d'une consigne ou une mesure d'au moins une variable de commande de la machine électrique,
- Détermination d'un paramètre de correction de la variable de commande, en fonction d'une prédiction (estimation) de tension absolue dépendante des courants dans les phases de la machine électrique ou des consignes des courants, et en fonction de consignes de tension (notamment en fonction de la tension absolue de consigne),

- Détermination de consignes de courant de la machine électrique synchrone, au moyen d'au moins un modèle de contrôle, le modèle de contrôle relie :

   ∘ La consigne de couple,
   ∘ La variable de commande corrigée au moyen dudit paramètre de correction, et
   ∘ Les consignes de courant : les consignes de courants dits « direct » et « en quadrature », ou de manière analogue, la consigne de la norme de courant et de l'angle de défluxage)

- Détermination d'un signal de commande de commutation de l'onduleur au moyen des consignes de courant, et
- Commande de l'onduleur au moyen du signal de commande de commutation.

Dans la suite de la description et dans les revendications, le terme « consignes de courant » désigne soit les consignes de courant « direct » et « en quadrature », soit la norme de courant et l'angle de défluxage, ou tout autre représentation équivalente des courants.

Ainsi, le procédé de commande selon l'invention détermine des consignes de tension, en prenant en compte une valeur adaptée de la tension de bus continu, ou de la variable de commande. Cette valeur adaptée de la tension de bus continu étant obtenue notamment au moyen des consignes ou des mesures de courant et de couple, formant une boucle de retour (rétroaction) dans le procédé de commande. De plus, le procédé de commande ne modifie pas directement les consignes de tension déterminées, mais uniquement les consignes de courant, dans le but de maîtriser lesdites consignes de tension. De cette manière, le procédé de commande selon l'invention peut utiliser, en temps réel, de manière optimale et robuste la tension de bus continu. Grâce à cela, le procédé de commande est robuste à la variation de la limite de tension de bus DC, et les performances et/ou le rendement de la machine électrique synchrone peuvent être améliorés. En outre, le procédé de commande selon l'invention permet une opération de défluxage de la machine électrique synchrone.

Selon un mode de réalisation de l'invention, le modèle de contrôle peut être un modèle numérique (par exemple résultant de simulations numériques de la machine électrique), un modèle analytique ou une cartographie qui relie la consigne de couple, la variable de commande corrigée et les consignes de courant.

De préférence, le modèle de contrôle peut être au moins une cartographie. De manière préférée, l'au moins une cartographie utilisée peut être une cartographie du type maximum de couple par ampère sous contrainte de tension de bus continu Vdc (MTPA). De préférence, le procédé de commande peut mettre en œuvre deux cartographies, une pour la consigne de courant direct, et une pour la consigne de courant en quadrature (ou respectivement une pour la norme de courant et une pour l'angle de défluxage). Avantageusement, de telles cartographies peuvent être des données de constructeur de la machine électrique, ou peuvent être obtenues par simulation ou expérimentalement.

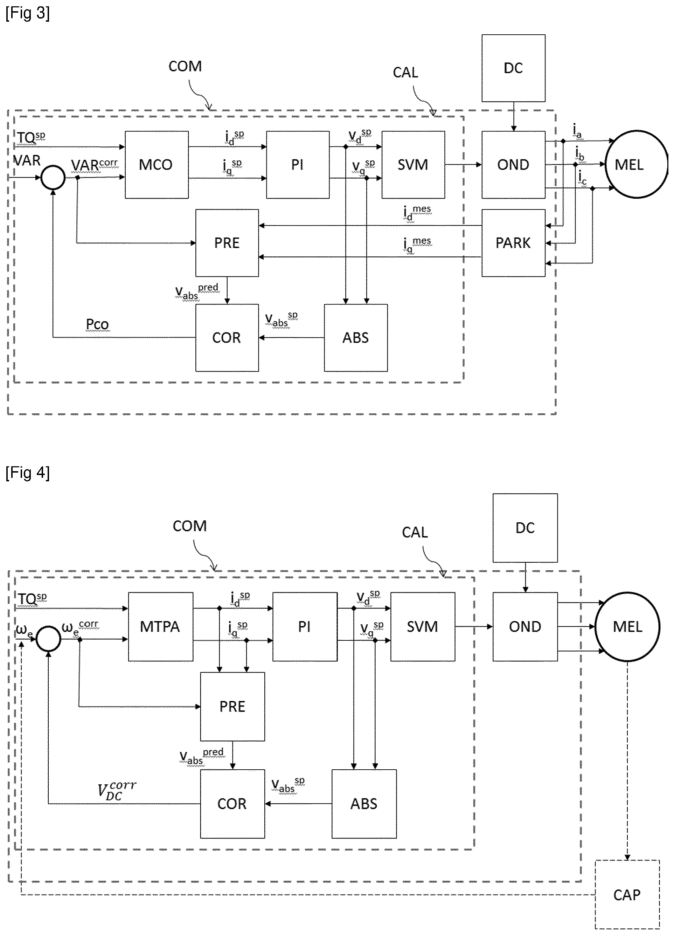

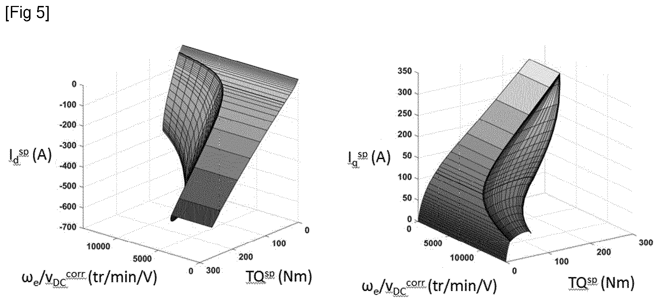

Des exemples de telles cartographies sont illustrés en figure 5 pour un mode de réalisation de l'invention (correspondant au troisième mode de réalisation de la figure 4 qui sera détaillé dans la suite de la description). La partie gauche de la figure est une cartographie de type MTPA (obtenues en maximisant le couple par ampère, sous contrainte de tension de phase maximale) de la consigne de courant direct $i_d^{sp}$ en A en fonction de la consigne de couple $TQ^{sp}$ en Nm et en fonction du ratio $\dfrac{\omega_e}{V_{DC}^{corr}}$ en tr/min/V (cette vitesse corrigée peut être homogène à une vitesse). La partie droite de la figure est une cartographie de type MTPA de la consigne de courant en quadrature $i_q^{sp}$ en A en fonction de la consigne de couple $TQ^{sp}$ en Nm et en fonction du ratio $\dfrac{\omega_e}{V_{DC}^{corr}}$ en tr/min/V.

Alternativement, les cartographies utilisées peuvent être des cartographies qui minimisent pour la machine électrique les pertes fer en plus des pertes Joule.

Conformément à une mise en œuvre de l'invention, on peut déterminer la prédiction de la tension absolue au moyen des consignes de courant par un estimateur. Alternativement, on peut déterminer la prédiction de tension absolue au moyen des mesures des courants dans les phases par un estimateur.

De plus, l'estimateur mis en œuvre dans ces alternatives peut dépendre de la valeur corrigée de la variable de commande au moyen du paramètre de correction, ou du paramètre de correction et de la variable de commande. Ainsi, l'estimateur peut être fidèle aux différentes étapes permettant de déterminer le contrôle de l'onduleur.

Pour ces deux alternatives, l'estimateur peut être construit pour prendre en compte les mêmes hypothèses que celles utilisées dans le modèle de contrôle. Selon un exemple de réalisation, l'estimateur peut être construit au moyen d'au moins une cartographie de flux non linéaire.

De manière classique, on peut déterminer les consignes de tension au moyen d'au moins un régulateur proportionnel intégral, noté régulateur PI dans la suite de la description. Un tel régulateur PI génère les consignes de tension en fonction des consignes de courant. Selon un mode de réalisation, le procédé de commande peut mettre en œuvre un premier régulateur PI pour la consigne de tension « directe », et un deuxième régulateur PI pour la consigne de tension « en quadrature ». Pour cette réalisation, le régulateur PI peut prendre en compte également les courants mesurés dans les phases de la machine électrique.

En variante, toute méthode analogue peut être mise en œuvre pour la détermination des consignes de tension.

Selon un aspect de l'invention, on peut déterminer le paramètre de correction en mettant en œuvre les étapes suivantes :

- On détermine la prédiction de tension absolue, notée $V_{abs}^{pred}$,

- On détermine les consignes de tension, $V_d^{sp}$ et $V_q^{sp}$ étant respectivement les consignes de tension directe et en quadrature,

- On calcule une tension absolue de consigne, par exemple au moyen de la formule $V_{abs}^{sp} = \sqrt{V_d^{sp\,2} + V_q^{sp\,2}}$ ou au moyen de toute formule analogue,

- On compare la prédiction de tension absolue $V_{abs}^{pred}$ et ladite tension absolue de consigne $V_{abs}^{sp}$, et

- On en déduit le paramètre de correction.

Selon une option de l'invention, le paramètre de correction peut être un gain ou une valeur corrigée d'une variable de la machine électrique. Lorsque le paramètre de correction est un gain, alors la valeur de commande corrigée peut correspondre au produit de la variable de commande par le gain. Lorsque le paramètre de correction est une valeur corrigée d'une variable de la machine électrique, alors la valeur de commande corrigée peut être obtenue par toute opération mathématique entre la variable de commande et la valeur corrigée d'une variable de la machine. Selon un exemple de réalisation, la valeur corrigée de la variable de la machine électrique peut être la tension de bus continu de l'onduleur, et la valeur de commande corrigée peut être la variable de commande divisée par la valeur corrigée de la tension de bus continu de l'onduleur.

Conformément à un mode de réalisation de l'invention, on peut déterminer le signal de commande de commutation de l'onduleur au moyen des consignes de tensions et d'un contrôle vectoriel, notamment un contrôle classique du vecteur spatial SVM (de l'anglais « Space Vector Modulation »), ou toute méthode analogue. Le signal de commande déterminé correspond aux signaux de commande envoyés aux commutations des bras de commutation de l'onduleur permettant de transformer le signal du bus continu en signaux alternatifs.

Pour le mode de réalisation, pour lequel la variable de commande de la machine électrique est la vitesse de rotation électrique, on peut estimer ou mesurer cette vitesse. Dans le cas de la mesure, elle peut être mise en œuvre par la mesure de la vitesse de rotation mécanique du rotor au moyen d'un capteur (notamment un capteur de position ou vitesse angulaire du rotor), et par multiplication de la mesure de la vitesse de rotation mécanique par le nombre de paires de pôles de la machine électrique. Dans le cas de l'estimation de la vitesse de rotation mécanique, on peut mettre en œuvre l'une quelconque méthode d'estimation sans capteur classique (de l'anglais « sensorless »).

Le système de commande selon l'invention comprend un onduleur, éventuellement un capteur de position et/ou de vitesse du rotor de la machine électrique, et un calculateur et une mémoire configurés pour mettre en œuvre les étapes du procédé de commande selon l'une quelconque des variantes ou des combinaisons de variantes décrites précédemment. En outre, le système de commande peut comporter des moyens de mesure des courants (non représentés) dans les phases de la machine électrique, par exemple des capteurs de courant.

La figure 2 illustre, schématiquement et de manière non limitative, les étapes du procédé selon un premier mode de réalisation de l'invention. Les éléments identiques à la figure 1 ne sont pas décrits une deuxième fois. Par conséquent, seul le calculateur CAL est détaillé.

Le procédé de commande mis en œuvre par le calculateur CAL comporte dans un premier temps une étape de détermination des consignes de courants $i_d^{sp}$ et $i_q^{sp}$ à partir de la consigne de couple $TQ^{sp}$ et de la variable de commande corrigée $VAR^{corr}$. Cette étape est mise en œuvre au moyen d'au moins un modèle de contrôle MCO, par exemple une cartographie.

Au moins un régulateur PI (de préférence deux régulateurs PI ou toute méthode analogue) est mis en œuvre pour déterminer les consignes de tension $V_d^{sp}$ et $V_q^{sp}$ à partir des consignes de courants $i_d^{sp}$ et $i_q^{sp}$.

Les consignes de tension $V_d^{sp}$ et $V_q^{sp}$ sont converties en signal de commande de commutation pour l'onduleur OND au moyen d'un contrôle de vecteur spatial SVM, ou toute méthode analogue.

En outre, le procédé de commande comporte une étape COR de détermination du paramètre de correction Pco.

Cette correction est mise en œuvre à partir d'une tension absolue de consigne $V_{abs}^{sp}$ qui est obtenue directement depuis les consignes de tension $V_d^{sp}$ et $V_q^{sp}$ et à partir d'une tension absolue prédite $V_{abs}^{pred}$ qui est obtenue par une étape de prédiction PRE (ou estimation) sur la base des consignes de tension $i_d^{sp}$ et $i_q^{sp}$. Tel qu'illustré, l'étape de prédiction PRE peut également prendre en compte la variable de commande corrigée $VAR^{corr}$.

Ce facteur de correction Pco corrige la variable de commande VAR en entrée du procédé de commande, de manière à déterminer la variable de commande corrigée $VAR^{corr}$ utilisé dans le modèle de contrôle MCO, formant ainsi une boucle de retour.

La figure 3 illustre, schématiquement et de manière non limitative, les étapes du procédé selon un deuxième mode de réalisation de l'invention. Les éléments identiques à la figure 1 ne sont pas décrits une deuxième fois. Par conséquent, seul le calculateur CAL est détaillé.

Le procédé de commande mis en œuvre par le calculateur CAL comporte dans un premier temps une étape de détermination des consignes de courants $i_d^{sp}$ et $i_q^{sp}$ à partir de la consigne de couple $TQ^{sp}$ et de la variable de commande corrigée $VAR^{corr}$. Cette étape est mise en œuvre au moyen d'au moins un modèle de contrôle MCO.

Au moins un régulateur PI (de préférence deux régulateurs PI ou toute méthode analogue) est mis en œuvre pour déterminer les consignes de tension $V_d^{sp}$ et $V_q^{sp}$ à partir des consignes de courants $i_d^{sp}$ et $i_q^{sp}$.

Les consignes de tension $V_d^{sp}$ et $V_q^{sp}$ sont converties en signal de commande de commutation pour l'onduleur OND au moyen d'un contrôle de vecteur spatial SVM, ou toute méthode analogue.

En outre, le procédé de commande comporte une étape COR de détermination du paramètre de correction Pco.

Cette correction est mise en œuvre à partir d'une tension absolue de consigne $V_{abs}^{sp}$ , qui est obtenue directement depuis les consignes de tension $V_d{}^{sp}$ et $V_q{}^{sp}$, et à partir d'une tension absolue prédite $V_{abs}^{pred}$ qui est obtenue par une étape de prédiction PRE (ou estimation) sur la base des mesures de tension $i_d{}^{mes}$ et $i_q{}^{mes}$. Les mesures de tension $i_d{}^{mes}$ et $i_q{}^{mes}$ sont obtenues en appliquant une transformation de PARK aux intensités $i_a$, $i_b$, $i_c$ mesurées par un capteur de courant dans les phases a, b et c de la machine électrique. Une telle transformation de PARK peut être réalisée en appliquant une relation du type :

$$\begin{pmatrix} i_d \\ i_q \end{pmatrix} = \begin{pmatrix} \cos\theta_e & \cos\left(\theta_e - \dfrac{2\pi}{3}\right) & \cos\left(\theta_e + \dfrac{2\pi}{3}\right) \\ -\sin\theta_e & -\sin\left(\theta_e - \dfrac{2\pi}{3}\right) & -\sin\left(\theta_e + \dfrac{2\pi}{3}\right) \end{pmatrix} \begin{pmatrix} i_A \\ i_B \\ i_C \end{pmatrix} \quad (1)$$

Avec $\theta e$ la position angulaire électrique du rotor par rapport au stator de la machine électrique (pour rappel la position angulaire électrique correspond à la multiplication de la position angulaire mécanique du rotor par rapport au stator de la machine électrique et du nombre de paires de pôles de la machine électrique).

Tel qu'illustré, l'étape de prédiction PRE peut également prendre en compte la variable de commande corrigée VAR$^{corr}$.

Ce facteur de correction Pco corrige la variable de commande VAR en entrée du procédé de commande, de manière à déterminer la variable de commande corrigée VAR$^{corr}$ utilisé dans le modèle de contrôle MCO, formant ainsi une boucle de retour.

Selon un exemple non limitatif de réalisation de l'invention, le procédé de commande d'une machine électrique synchrone peut comporter les étapes suivantes :

- Réception de la consigne de couple de la machine électrique synchrone,
- Mesure de la vitesse de rotation électrique du rotor de la machine électrique (ou mesure de la vitesse de rotation mécanique du rotor multiplié par le nombre de paires de pôles de la machine électrique),
- Détermination d'une valeur corrigée de la tension de bus continu, notée $V_{DC}{}^{corr}$, en fonction d'une prédiction (estimation) de tension absolue dépendante des consignes de courant, et en fonction de consignes de tension,
- Détermination de consignes de courant de la machine électrique synchrone, au moyen de cartographies, les cartographies relient :

    ◦ La consigne de couple,
    ◦ Un ratio de la vitesse de rotation électrique du rotor par rapport à la valeur corrigée de la tension de bus continu, ce ratio s'écrit : $\dfrac{\omega_e}{V_{DC}^{corr}}$ , et
    ◦ Les consignes de courant dits « direct » et « en quadrature »

- Détermination d'un signal de commande de commutation de l'onduleur au moyen des consignes de courant, et
- Commande de l'onduleur au moyen du signal de commande de commutation.

Selon un aspect de cet exemple de réalisation, on peut déterminer la valeur corrigée de la tension de bus continu en mettant en œuvre les étapes suivantes :

- On détermine la prédiction de tension absolue, notée $V_{abs}^{pred}$ ,

- On détermine les consignes de tension, $V_d{}^{sp}$ et $V_q{}^{sp}$ étant respectivement les consignes de tension directe et en quadrature,

- On calcule une tension absolue de consigne par exemple au moyen de la formule $V_{abs}^{sp} = \sqrt{V_d^{sp\,2} + V_q^{sp\,2}}$ ou au moyen de toute formule analogue,

- On compare la prédiction de tension absolue $V_{abs}^{pred}$ et ladite tension absolue de consigne $V_{abs}^{sp}$ , et

- On en déduit la valeur corrigée de la tension de bus continu $V_{DC}{}^{corr}$.

La figure 4 illustre, schématiquement et de manière non limitative, les étapes du procédé selon un troisième mode de réalisation de l'invention. Les éléments identiques à la figure 1 ne sont pas décrits une deuxième fois. Par conséquent, seul le calculateur CAL est détaillé.

Le procédé de commande mis en œuvre par le calculateur CAL comporte dans un premier temps une étape de détermination des consignes de courants $i_d{}^{sp}$ et $i_q{}^{sp}$ à partir de la consigne de couple $TQ^{sp}$ et du ratio de la vitesse électrique du rotor de la machine électrique par rapport à la valeur corrigée de la tension de bus continu $\dfrac{\omega_e}{V_{DC}^{corr}}$. Cette étape est mise en œuvre au moyen d'au moins une cartographie MTPA, par exemple les deux cartographies illustrées en figure 5.

Au moins un régulateur PI (de préférence deux régulateurs PI) est mis en œuvre pour déterminer les consignes de tension $V_d{}^{sp}$ et $V_q{}^{sp}$ à partir des consignes de courants $i_d{}^{sp}$ et $i_q{}^{sp}$.

Les consignes de tension $V_d{}^{sp}$ et $V_q{}^{sp}$ sont converties en signal de commande de commutation pour l'onduleur OND au moyen d'un contrôle de vecteur spatial SVM.

En outre, le procédé de commande comporte une étape COR de détermination de la valeur corrigée de la tension de bus continu $V_{DC}{}^{corr}$. Cette correction est mise en œuvre à partir d'une tension absolue de consigne $V_{abs}^{sp}$, qui est obtenue directement depuis les consignes de tension $V_d{}^{sp}$ et $V_q{}^{sp}$, et à partir d'une tension absolue prédite $V_{abs}^{pred}$ qui est obtenue par une étape de prédiction PRE (estimation) sur la base des consignes de tension $i_d{}^{sp}$ et $i_q{}^{sp}$. Tel qu'illustré, l'étape de prédiction PRE peut également prendre en compte déterminer le ratio

$$\frac{\omega_e}{V_{DC}^{corr.}}$$

Cette valeur corrigée de la tension de bus continu $V_{DC}{}^{corr}$ divise la mesure de la vitesse de rotation électrique $\omega_e$ en entrée du procédé de commande, de manière à déterminer le ratio $\dfrac{\omega_e}{V_{DC}^{corr}}$ utilisé dans les cartographies MTPA, formant ainsi une boucle de retour.

Le procédé et le système de commande selon l'invention permettent en outre des transitoires rapides grâce à l'adaptation automatique à la limite de tension qu'il permet. Ainsi, on peut tenter de réaliser les transitoires les plus rapides possibles sans se soucier de dépasser la limite de tension lors de ces transitoires, puisqu'elle sera bien respectée, tout en maintenant la production de couple à une valeur aussi proche que possible de la cible. Selon un mode de réalisation alternatif, l'invention permettant d'adapter l'indice de modulation utilisé, il est possible d'adapter ce dernier dynamiquement pour obtenir des transitoires plus rapides par exemple.

De plus, le procédé et le système de commande selon l'invention permettent d'obtenir de bonnes performances de la machine électrique synchrone même en présence d'incertitudes relatives à certains paramètres de la machine électrique synchrone. Cela est permis par la boucle de retour comprise dans l'invention, qui garantit l'utilisation de la limite de tension ciblée, tout en maintenant l'angle de défluxage des courants aussi proche que possible de sa valeur optimale.

**Revendications**

1. Procédé de commande d'une machine électrique synchrone (MEL) pilotée par un onduleur (OND) pourvu de plusieurs bras de commutation, dans lequel on met en œuvre les étapes suivantes :

   a) On acquiert une consigne de couple ($TQ^{sp}$) de ladite machine électrique (MEL) ;
   b) On acquiert une consigne ou une mesure d'au moins une variable de commande (VAR) de ladite machine électrique (MEL) ; **caractérisé en ce que**:
   c) On détermine un paramètre de correction (Pco) de ladite variable de commande (VAR) en fonction d'une prédiction de tension absolue ($V_{abs}{}^{pred}$) dépendante de courants dans les phases de ladite machine électrique (MEL) et en fonction de consignes de tension ($V_d{}^{sp}$, $V_q{}^{sp}$) ;
   d) On détermine des consignes de courant ($i_d{}^{sp}$, $i_q{}^{sp}$) de ladite machine électrique (MEL) au moyen d'au moins un modèle de contrôle (MCO) qui relie ladite consigne de couple ($TQ^{sp}$), ladite variable de commande corrigée

(VAR<sup>corr</sup>) au moyen dudit paramètre de correction (Pco) et lesdites consignes de courant ($i_d^{sp}$, $i_q^{sp}$) de ladite machine électrique ;

e) On détermine un signal de commande de commutation dudit onduleur au moyen desdites consignes de courant ($i_d^{sp}$, $i_q^{sp}$) ; et

f) On commande ledit onduleur (OND) au moyen dudit signal de commande de commutation.

2. Procédé de commande d'une machine électrique synchrone selon la revendication 1, dans lequel le modèle de contrôle (MCO) est une cartographie qui relie ladite consigne de couple (TQ<sup>sp</sup>), ladite variable de commande corrigée (VAR<sup>corr</sup>), et lesdits consignes de courant ($i_d^{sp}$, $i_q^{sp}$), de préférence ladite cartographie est de type maximum de couple par ampère (MTPA).

3. Procédé de commande d'une machine électrique synchrone selon l'une des revendications précédentes, dans lequel on détermine, par un estimateur, ladite prédiction de tension absolue au moyen desdites consignes de courant ($i_d^{sp}$, $i_q^{sp}$) ou au moyen de mesures desdits courants ($i_d^{mes}$, $i_q^{mes}$) dans les phases de ladite machine électrique (MEL).

4. Procédé de commande d'une machine électrique synchrone selon l'une des revendications précédentes, dans lequel on détermine lesdites consignes de tension ($V_d^{sp}$, $V_q^{sp}$) au moyen d'au moins un régulateur proportionnel intégral (PI) et desdites consignes de courant ($i_d^{sp}$, $i_q^{sp}$).

5. Procédé de commande d'une machine électrique synchrone selon les revendications 3 ou 4, dans lequel on détermine ledit paramètre de correction (Pco) en mettant en œuvre les étapes suivantes :

i) On détermine une prédiction de tension absolue ($v_{abs}^{pred}$) ;
ii) On détermine lesdites consignes de tension ($V_d^{sp}$, $V_q^{sp}$) ;

iii) On calcule une tension absolue de consigne par la formule : $V_{abs}^{sp} = \sqrt{V_d^{sp2} + V_q^{sp2}}$ , $V_d^{sp}$ et $V_q^{sp}$ étant respectivement les consignes de tension directe et en quadrature

iv) On compare ladite prédiction de tension absolue ($v_{abs}^{pred}$) à ladite tension absolue de consigne ($v_{abs}^{sp}$) ; et
v) On en déduit ledit paramètre de correction (Pco) à partir de ladite comparaison.

6. Procédé de commande d'une machine électrique synchrone selon l'une des revendications 4 ou 5, dans lequel on détermine ledit signal de commande au moyen desdites consignes de tension ($V_d^{sp}$, $V_q^{sp}$) et d'un contrôle vectoriel (SVM).

7. Procédé de commande d'une machine électrique synchrone selon l'une des revendications précédentes, dans lequel ledit paramètre de correction (Pco) est un gain ou une valeur corrigée d'une variable de ladite machine électrique, de préférence ledit paramètre de correction est une valeur corrigée de la tension de bus continu de l'onduleur ($V_{DC}^{corr}$).

8. Procédé de commande d'une machine électrique synchrone selon l'une des revendications précédentes, dans lequel ladite variable de commande (VAR) de ladite machine électrique est la vitesse de rotation électrique ($\omega_e$) du rotor de ladite machine électrique (MEL).

9. Procédé de commande d'une machine électrique synchrone selon la revendication 8, dans lequel on estime ou on mesure ladite vitesse de rotation électrique ($\omega_e$) dudit rotor de ladite machine électrique, de préférence on mesure ladite vitesse de rotation électrique dudit rotor par multiplication de la mesure de la vitesse de rotation mécanique dudit rotor par le nombre de paires de pôles de ladite machine électrique.

10. Procédé de commande d'une machine électrique synchrone selon la revendication 9, dans lequel on mesure ladite vitesse de rotation dudit rotor au moyen d'un capteur de position et/ou un capteur de vitesse de rotation (CAP) dudit rotor.

11. Système de commande d'une machine électrique (MEL) synchrone comprenant un onduleur (OND) pourvu de bras de commutation, un calculateur (CAL) et une mémoire configurés pour mettre en œuvre les étapes du procédé de commande selon l'une des revendications précédentes pour commander ledit onduleur (OND) avec :

a) Des moyens d'acquisition une consigne de couple (TQ<sup>sp</sup>) de ladite machine électrique (MEL) ;

b) Des moyens d'acquisition une consigne ou une mesure d'au moins une variable de commande (VAR) de ladite machine électrique (MEL) ; **caractérisé par**:

c) Des moyens de détermination un paramètre de correction (Pco) de ladite variable de commande (VAR) en fonction d'une prédiction de tension absolue ($V_{abs}^{pred}$) dépendante de courants dans les phases de ladite machine électrique (MEL) et en fonction de consignes de tension ($V_d^{sp}$, $V_q^{sp}$) ;

d) Des moyens de détermination des consignes de courant ($i_d^{sp}$, $i_q^{sp}$) de ladite machine électrique (MEL) au moyen d'au moins un modèle de contrôle (MCO) qui relie ladite consigne de couple ($TQ^{sp}$), ladite variable de commande corrigée ($VAR^{corr}$) au moyen dudit paramètre de correction (Pco) et lesdites consignes de courant ($i_d^{sp}$, $i_q^{sp}$) de ladite machine électrique ;

e) Des moyens de détermination d'un signal de commande de commutation dudit onduleur au moyen desdites consignes de courant ($i_d^{sp}$, $i_q^{sp}$) ; et

f) Des moyens de commande dudit onduleur (OND) au moyen dudit signal de commande de commutation.

12. Système de commande d'une machine électrique synchrone selon la revendication 11, dans lequel ladite machine électrique (MEL) est une machine synchro-réluctante assistée par des aimants permanents ou une machine synchrone à aimants permanents.

**Patentansprüche**

1. Verfahren zur Steuerung einer elektrischen Synchronmaschine (MEL), die von einem Wechselrichter (OND) angesteuert wird, der mit mehreren Schaltarmen versehen ist, bei dem man die folgenden Schritte durchführt:

   a) Man erfasst einen Drehmomentsollwert ($TQ^{sp}$) der elektrischen Maschine (MEL);

   b) Man erfasst einen Sollwert oder einen Messwert mindestens einer Steuerungsvariable (VAR) der elektrischen Maschine (MEL); **dadurch gekennzeichnet, dass**:

   c) Man einen Korrekturparameter (Pco) der Steuerungsvariable (VAR) in Abhängigkeit von einer Vorhersage einer absoluten Spannung ($V_{abs}^{pred}$), die von Strömen in den Phasen der elektrischen Maschine (MEL) abhängig ist, und in Abhängigkeit von Spannungssollwerten ($V_d^{sp}$, $V_q^{sp}$) bestimmt;

   d) Man Stromsollwerte ($i_d^{sp}$, $i_q^{sp}$) der elektrischen Maschine (MEL) mittels mindestens eines Kontrollmodells (MCO) bestimmt, das den Drehmomentsollwert ($TQ^{sp}$), die mittels des Korrekturparameters (Pco) korrigierte Steuerungsvariable ($VAR^{corr}$) und die Stromsollwerte ($i_d^{sp}$, $i_q^{sp}$) der elektrischen Maschine verknüpft;

   e) Man ein Schaltsteuersignal des Wechselrichters mittels der Stromsollwerte ($i_d^{sp}$, $i_q^{sp}$) bestimmt; und

   f) Man den Wechselrichter (OND) mittels des Schaltsteuersignals steuert.

2. Verfahren zur Steuerung einer elektrischen Synchronmaschine nach Anspruch 1, bei dem das Kontrollmodell (MCO) ein Kennfeld ist, das den Drehmomentsollwert ($TQ^{sp}$), die korrigierte Steuerungsvariable ($VAR^{corr}$) und die Stromsollwerte ($i_d^{sp}$, $i_q^{sp}$) verknüpft, wobei das Kennfeld bevorzugt vom Typ Maximales Drehmoment je Ampere (MTPA) ist.

3. Verfahren zur Steuerung einer elektrischen Synchronmaschine nach einem der vorhergehenden Ansprüche, bei dem man durch einen Schätzer die Vorhersage einer absoluten Spannung mittels der Stromsollwerte ($i_d^{sp}$, $i_q^{sp}$) oder mittels Messwerten der Ströme ($i_d^{mes}$, $i_q^{mes}$) in den Phasen der elektrischen Maschine (MEL) bestimmt.

4. Verfahren zur Steuerung einer elektrischen Synchronmaschine nach einem der vorhergehenden Ansprüche, bei dem man die Spannungssollwerte ($V_d^{sp}$, $V_q^{sp}$) mittels mindestens eines Proportional-Integral-Reglers (PI) und der Stromsollwerte ($i_d^{sp}$, $i_q^{sp}$) bestimmt.

5. Verfahren zur Steuerung einer elektrischen Synchronmaschine nach den Ansprüchen 3 oder 4, bei dem man den Korrekturparameter (Pco) bestimmt, indem die folgenden Schritte durchgeführt werden:

   i) Man bestimmt eine Vorhersage der absoluten Spannung ($V_{abs}^{pred}$) ;

   ii) Man bestimmt die Spannungssollwerte ($V_d^{sp}$, $V_q^{sp}$);

   iii) Man berechnet eine absolute Sollspannung mit der Formel: $$V_{abs}^{sp} = \sqrt{V_d^{sp2} + V_q^{sp2}}$$ , wobei $V_d^{sp}$ und $V_q^{sp}$ die Direkt- und Quadraturspannungssollwerte sind;

   iv) Man vergleicht die Vorhersage der absoluten Spannung ($v_{abs}^{pred}$) à mit der absoluten Sollspannung ($v_{abs}^{sp}$) ; und

v) Man leitet daraus ausgehend von dem Vergleich den Korrekturparameter (Pco) ab.

**6.** Verfahren zur Steuerung einer elektrischen Synchronmaschine nach einem der Ansprüche 4 oder 5, bei dem man das Steuersignal mittels der Spannungssollwerte ($V_d{}^{sp}$, $V_q{}^{sp}$) und einer vektoriellen Kontrolle (SVM) bestimmt.

**7.** Verfahren zur Steuerung einer elektrischen Synchronmaschine nach einem der vorhergehenden Ansprüche, bei dem der Korrekturparameter (Pco) eine Verstärkung oder ein korrigierter Wert einer Variable der elektrischen Maschine ist, der Korrekturparameter bevorzugt ein korrigierter Wert der Gleichstrombusspannung des Wechselrichters ( $V_{DC}^{corr}$ ) ist.

**8.** Verfahren zur Steuerung einer elektrischen Synchronmaschine nach einem der vorhergehenden Ansprüche, bei dem die Steuerungsvariable (VAR) der elektrischen Maschine die elektrische Drehzahl ($\omega_e$) des Rotors der elektrischen Maschine (MEL) ist.

**9.** Verfahren zur Steuerung einer elektrischen Synchronmaschine nach Anspruch 8, bei dem man die elektrische Drehzahl ($\omega_e$) des Rotors der elektrischen Maschine schätzt oder misst, man die elektrische Drehzahl des Rotors bevorzugt durch Multiplikation des Messwerts der mechanischen Drehzahl des Rotors mit der Polpaarzahl der elektrischen Maschine misst.

**10.** Verfahren zur Steuerung einer elektrischen Synchronmaschine nach Anspruch 9, bei dem man die Drehzahl des Rotors mittels eines Positionssensors und/oder eines Drehzahlsensors (CAP) des Rotors misst.

**11.** System zur Steuerung einer elektrischen Synchronmaschine (MEL), umfassend einen Wechselrichter (OND), der mit Schaltarmen versehen ist, einen Rechner (CAL) und einen Speicher, die dazu ausgestaltet sind, die Schritte des Verfahrens zur Steuerung nach einem der vorhergehenden Ansprüche durchzuführen, um den Wechselrichter (OND) zu steuern mit:

a) Mitteln zur Erfassung eines Drehmomentsollwerts (TQ$^{sp}$) der elektrischen Maschine (MEL);
b) Mitteln zur Erfassung eines Sollwerts oder eines Messwerts mindestens einer Steuerungsvariable (VAR) der elektrischen Maschine (MEL); **gekennzeichnet durch**:
c) Mittel zur Bestimmung eines Korrekturparameters (Pco) der Steuerungsvariable (VAR) in Abhängigkeit von einer Vorhersage einer absoluten Spannung ($V_{abs}{}^{pred}$), die von Strömen in den Phasen der elektrischen Maschine (MEL) abhängig ist, und in Abhängigkeit von Spannungssollwerten ($V_d{}^{sp}$, $V_q{}^{sp}$);
d) Mittel zur Bestimmung der Stromsollwerte ($i_d{}^{sp}$, $i_q{}^{sp}$) der elektrischen Maschine (MEL) mittels mindestens eines Kontrollmodells (MCO), das den Drehmomentsollwert (TQ$^{sp}$), die mittels des Korrekturparameters (Pco) korrigierte Steuerungsvariable (VAR$^{corr}$) und die Stromsollwerte ($i_d{}^{sp}$, $i_q{}^{sp}$) der elektrischen Maschine verknüpft;
e) Mittel zur Bestimmung eines Schaltsteuersignals des Wechselrichters mittels der Stromsollwerte ($i_d{}^{sp}$, $i_q{}^{sp}$); und
f) Mittel zur Steuerung des Wechselrichters (OND) mittels des Schaltsteuersignals.

**12.** System zur Steuerung einer elektrischen Synchronmaschine nach Anspruch 11, wobei die elektrische Maschine (MEL) eine permanentmagnetunterstützte Synchron-Reluktanzmaschine oder eine Synchronmaschine mit Permanentmagneten ist.

## Claims

**1.** Method for controlling a synchronous electric machine (MEL) controlled by an inverter (OND) provided with several switching arms, wherein the following steps are implemented:

a) a torque setpoint (TQ$^{sp}$) of said electric machine (MEL) is acquired;
b) a setpoint or a measurement of at least one control variable (VAR) for said electric machine (MEL) is acquired;
**characterized in that**:
c) a correction parameter (Pco) for said control variable (VAR) is determined as a function of an absolute voltage prediction ($V_{abs}{}^{pred}$) which is dependent on currents in the phases of said electric machine (MEL) and as a function of voltage setpoints ($V_d{}^{sp}$, $V_q{}^{sp}$);
d) current setpoints ($i_d{}^{sp}$, $i_q{}^{sp}$) of said electric machine (MEL) are determined by means of at least one control model (MCO) which connects said torque setpoint (TQ$^{sp}$), said control variable (VAR$^{corr}$) corrected by means of said correction parameter (Pco), and said current setpoints (i$_d$$^{sp}$, i$_q$$^{sp}$) of said electric machine;
e) a switching control signal for said inverter is determined by means of said current setpoints (i$_d$$^{sp}$, i$_q$$^{sp}$); and
f) said inverter (OND) is controlled by means of said switching control signal.

2. Method for controlling a synchronous electric machine according to Claim 1, wherein the control model (MCO) is a map which connects said torque setpoint (TQ$^{sp}$), said corrected control variable (VAR$^{corr}$) and said current setpoints (i$_d$$^{sp}$, i$_q$$^{sp}$); preferably said map is of maximum torque per ampere (MTPA) type.

3. Method for controlling a synchronous electric machine according to one of the preceding claims, wherein said absolute voltage prediction is determined by an estimator by means of said current setpoints (i$_d$$^{sp}$, i$_q$$^{sp}$) or by means of measurements of said currents (i$_d$$^{mes}$, i$_q$$^{mes}$) in the phases of said electric machine (MEL).

4. Method for controlling a synchronous electric machine according to one of the preceding claims, wherein said voltage setpoints (V$_d$$^{sp}$, V$_q$$^{sp}$) are determined by means of at least one proportional-integral controller (PI) and said current setpoints (i$_d$$^{sp}$, i$_q$$^{sp}$).

5. Method for controlling a synchronous electric machine according to Claim 3 or 4, wherein said correction parameter (Pco) is determined by implementing the following steps:

i) an absolute voltage prediction (v$_{abs}$$^{pred}$) is determined;
ii) said voltage setpoints (V$_d$$^{sp}$, V$_q$$^{sp}$) are determined;

iii) a setpoint absolute voltage is calculated using the formula:
$$V_{abs}^{sp} = \sqrt{V_d^{sp^2} + V_q^{sp^2}}$$
, where V$_d$$^{sp}$ and V$_q$$^{sp}$
are the forward and quadrature voltage setpoints, respectively;
iv) said absolute voltage prediction (v$_{abs}$$^{pred}$) is compared with said setpoint absolute voltage (v$_{abs}$$^{sp}$); and
v) said correction parameter (Pco) is deduced on the basis of said comparison.

6. Method for controlling a synchronous electric machine according to one of Claims 4 and 5, wherein said control signal is determined by means of said voltage setpoints (V$_d$$^{sp}$, V$_q$$^{sp}$) and vector control (SVM) .

7. Method for controlling a synchronous electric machine according to one of the preceding claims, wherein said correction parameter (Pco) is a gain or a corrected value of a variable of said electric machine; preferably said correction parameter is a corrected value of the DC bus voltage of the inverter ( $V_{DC}^{corr}$ ).

8. Method for controlling a synchronous electric machine according to one of the preceding claims, wherein said control variable (VAR) for said electric machine is the electrical rotation speed ($\omega_e$) of the rotor of said electric machine (MEL).

9. Method for controlling a synchronous electric machine according to Claim 8, wherein said electrical rotation speed ($\omega_e$) of said rotor of said electric machine is estimated or measured; preferably said electrical rotation speed of said rotor is measured by multiplying the measurement of the mechanical rotation speed of said rotor by the number of pairs of poles of said electric machine.

10. Method for controlling a synchronous electric machine according to Claim 9, wherein said rotation speed of said rotor is measured by means of a position sensor and/or a rotation speed sensor (CAP) for said rotor.

11. System for controlling a synchronous electric machine (MEL) comprising an inverter (OND) provided with switching arms, a computer (CAL) and a memory which are configured to implement the steps of the control method according to one of the preceding claims in order to control said inverter (OND) with:

a) means for acquiring a torque setpoint (TQ$^{sp}$) of said electric machine (MEL);
b) means for acquiring a setpoint or a measurement of at least one control variable (VAR) for said electric machine (MEL); **characterized by**:
c) means for determining a correction parameter (Pco) for said control variable (VAR) as a function of an absolute voltage prediction (V$_{abs}$$^{pred}$) which is dependent on currents in the phases of said electric machine (MEL) and as a function of voltage setpoints (V$_d$$^{sp}$, V$_q$$^{sp}$);

d) means for determining the current setpoints ($i_d^{sp}$, $i_q^{sp}$) of said electric machine (MEL) by means of at least one control model (MCO) which connects said torque setpoint (TQ$^{sp}$), said control variable (VAR$^{corr}$) corrected by means of said correction parameter (Pco), and said current setpoints ($i_d^{sp}$, $i_q^{sp}$) of said electric machine;

e) means for determining a switching control signal for said inverter by means of said current setpoints ($i_d^{sp}$, $i_q^{sp}$); and

f) means for controlling said inverter (OND) by means of said switching control signal.

12. System for controlling a synchronous electric machine according to Claim 11, wherein said electric machine (MEL) is a permanent magnet assisted synchronous reluctance machine or a permanent magnet synchronous machine.

[Fig 1]

[Fig 2]

[Fig 3]

[Fig 4]

[Fig 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051296 A1
- US 9479102 B
- US 9768719 B
- KR 1020200049165 A1
- US 20130088179 A1